# EUROPEAN PATENT APPLICATION

(11) **EP 4 692 807 A1**
(43) Date of publication of application: **11.02.2026**
(21) Application number: 25190504.8
(22) Date of filing: 18.07.2025
(51) Int. Cl.: G01N 35/04

(54) **STORAGE MECHANISM, CONSUMABLE FEEDING SYSTEM, AND SAMPLE ANALYZER**

(30) Priority: 08.08.2024 CN 202411091448
(71) Applicant: Shenzhen New Industries Biomedical Engineering Co., Ltd., Shenzhen, Guangdong 518122 (CN)
(72) Inventor: DENG, Yaochao, Guangdong, 518122 (CN); FENG, Shiming, Guangdong, 518122 (CN); ZOU, Jialiang, Guangdong, 518122 (CN); ZHU, Liang, Guangdong, 518122 (CN); HU, Yi, Guangdong, 518122 (CN); ZHOU, Gang, Guangdong, 518122 (CN); WU, Yunheng, Guangdong, 518122 (CN)
(74) Representative: Zacco GmbH

(57) **Abstract**

The present invention relates to a storage mechanism, a consumable feeding system, and a sample analyzer. The storage mechanism includes: a storage assembly which includes a storage body, wherein the storage body is provided with a storage channel; and a loading assembly which is movably disposed on the storage body. The storage mechanism has a first state and a second state. When the storage mechanism is in the first state, the loading assembly opens an inlet of the storage channel, the loading assembly at least partially protrudes from the storage channel, and the loading assembly can convey a loaded consumable into the storage channel. When the storage mechanism is in the second state, the loading assembly closes the inlet of the storage channel. The storage mechanism, consumable feeding system, and sample analyzer provided by the present invention can reduce an occupied space and relieve the burden of a sliding rail.

## Description

### Cross-Reference to Related Application

The application claims the priority to Chinese Patent Application No. CN202411091448.9, filed to the Chinese Patent Office on August 8, 2024 and entitled "Storage Mechanism, Consumable Feeding System, and Sample Analyzer".

### Technical Field

The present invention relates to the technical field of medical apparatus and instruments, and in particular, to a storage mechanism, a consumable feeding system, and a sample analyzer.

### Background

Using an immunoassay analyzer in a sample analyzer as an example, the immunoassay analyzer is a high-sensitivity and high-specificity analyzer which has developed rapidly in recent years in the world, and is configured to detect various immune indexes of samples such as blood, urine, other body fluids, or the like. The principle is to combine two technologies, which are antibody antigen reaction and chemiluminescence, to achieve high specificity and high sensitivity.

In the immunoassay analyzer, a consumable feeding system is generally required to convey the consumable to a feeding station, so as to rapidly replace the consumable, thereby ensuring that the immunoassay analyzer can operate continuously and efficiently.

In a large hospital, for easy of consumable loading by a user, a drawer structure is generally disposed. The drawer structure has a certain storage space, and can accommodate a plurality of consumables at once. However, the user can only load the consumable each time after completely pulling out the drawer structure, and then generally push back the drawer structure after the drawer structure is loaded with the consumable. Thus, a larger space is occupied, and it is easy to cause a sliding rail that is connected with the drawer structure and guides the drawer structure to slide to have a heavier burden and be easily deformed and damaged.

### Summary

Based on this, in view of the above problems, it is necessary to provide a storage mechanism, consumable feeding system, and sample analyzer, which can reduce an occupied space and relieve the burden of a sliding rail.

The storage mechanism includes:
a storage assembly including a storage body, wherein the storage body is provided with a storage channel; and
a loading assembly movably disposed on the storage body, wherein
the storage mechanism has a first state and a second state, when the storage mechanism is in the first state, the loading assembly opens an inlet of the storage channel, the loading assembly at least partially protrudes from the storage channel, and the loading assembly is capable of conveying a loaded consumable into the storage channel; when the storage mechanism is in the second state, the loading assembly closes the inlet of the storage channel; and
when the loading assembly moves relative to the storage body due to an external force, the storage mechanism is switched between the first state and the second state.

In some embodiments, the loading assembly is slidably disposed on the storage body, and the loading assembly slides relative to the storage body such that the storage mechanism is switched between the first state and the second state.

In some embodiments, the loading assembly is rotatably disposed on the storage body, and the loading assembly rotates relative to the storage body such that the storage mechanism is switched between the first state and the second state.

In some embodiments, the storage assembly further includes a storage driver unit, and the storage driver unit is disposed on the storage body and comprises a storage conveyor belt located in the storage channel;
the loading assembly includes a loading body and a loading driver unit, the loading body is slidably disposed on the storage body, and the loading driver unit is disposed on the loading body and includes a loading conveyor belt; and
when the storage mechanism is in the first state, the loading body opens the inlet of the storage channel, the loading body and the loading conveyor belt at least partially protrude from the storage channel, the loading conveyor belt conveys the loaded consumable to the storage conveyor belt, and when the storage mechanism is in the second state, the loading body closes the inlet of the storage channel.

In some embodiments, the storage assembly further includes a storage driver unit, and the storage driver unit is disposed on the storage body and comprises a storage conveyor belt located in the storage channel;
the loading assembly includes a loading body and a loading driver unit, the loading body is rotatably disposed on the storage body, and the loading driver unit is disposed on the loading body and includes a loading conveyor belt; and
when the storage mechanism is in the first state, the loading body opens the inlet of the storage channel, the loading body and the loading conveyor belt at least partially protrude from the storage channel, the loading conveyor belt conveys the loaded consumable to the storage conveyor belt, and when the storage mechanism is in the second state, the loading body closes the inlet of the storage channel.

In some embodiments, the loading body is slidably disposed on the storage body, and when the storage mechanism is in the second state, the loading conveyor belt is completely accommodated in the storage channel.

In some embodiments, the loading body is rotatably disposed on the storage body, and the loading assembly is always located outside the storage channel.

In some embodiments, the loading conveyor belt is provided with a loading conveying section configured to convey the consumable, the storage conveyor belt is provided with a storage conveying section configured to convey the consumable, and the loading conveying section and the storage conveying section extend in a same direction; the loading conveying section is a tilted section of which height gradually decreases in an extending direction of the loading conveying section, the storage conveying section is a straight section with an unchanged height in an extending direction of the storage conveying section, the loading conveying section is provided at an included angle to the storage conveying section, and the included angle is greater than 90°; and
when the storage mechanism is in the first state, the loading conveying section is at least partially higher than the storage conveying section, and a portion of the loading conveying section that is higher than the storage conveying section is configured to convey the consumable to the storage conveying section.

In some embodiments, when the loading body is slidably disposed on the storage body, the loading conveyor belt and the storage conveyor belt are arranged along a width direction of the storage conveyor belt.

In some embodiments, when the loading body is rotatably disposed on the storage body and the storage mechanism is in the first state, the loading conveyor belt and the storage conveyor belt are arranged along the extending direction of the storage conveyor belt.

In some embodiments, the loading driver unit further includes a loading motor, a loading transmission wheel, a loading synchronous belt, a loading intermediate wheel, a loading shaft, loading driving wheels, and loading driven wheels; and
the loading motor, the loading shaft, and the loading driven wheels are all mounted on the loading body, the loading motor is connected with the loading transmission wheel, the loading synchronous belt is sleeved outside the loading transmission wheel and loading intermediate wheel, the loading driving wheels are distributed on two opposite sides of the loading intermediate wheel, the loading driving wheels and the loading intermediate wheel are all fixed on the loading shaft, the loading driving wheels and the loading driven wheels all correspond to the loading conveyor belts on a one-to-one basis, and the loading conveyor belt is sleeved outside corresponding the loading driving wheel and corresponding the loading driven wheel.

In some embodiments, the storage mechanism further includes a loading detection member, and the loading detection member is disposed on the loading body; and
the loading detection member is configured to detect whether the consumable is loaded onto the loading conveyor belt when the storage mechanism is in the first state, the loading driver unit and the storage driver unit both are configured to be turned on when the consumable is loaded onto the loading conveyor belt.

In some embodiments, the storage mechanism further includes a controller, a loading body detection member, a counting-checking detection member, and an outlet detection member, the loading body detection member, the counting-checking detection member, and the outlet detection member are all electrically connected with the controller, the loading body detection member is configured to detect whether the loading assembly closes the inlet of the storage channel when the storage mechanism is in the second state; the counting-checking detection member is configured to count a number of consumable boxes conveyed onto the storage conveyor belt when the storage mechanism is in the first state; and the outlet detection member is configured to detect whether a first-loaded consumable box reaches an outlet of the storage channel when the storage mechanism is in the second state, the counting-checking detection member cooperates with the outlet detection member to realize a consumable box counting operation.

A consumable feeding system, including the storage mechanism described in any one of the above embodiments.

A sample analyzer, including the consumable feeding system described in the above embodiment.

According to the storage mechanism, the consumable feeding system, and the sample analyzer, the storage mechanism is designed to include the storage assembly and the loading assembly, the storage body of the storage assembly is a portion that is fixed, the loading assembly is a portion that moves relative to the storage body, and when the storage mechanism is in the first state, the loading assembly can partially protrude from the storage channel. In this way, a length of the loading assembly protruding to the exterior is shorter, and a space occupied externally is also reduced. Furthermore, when the storage mechanism is in the first state, the loading assembly can automatically convey the loaded consumable into the storage channel. Therefore, in the process of switching the storage mechanism to the second state, since the loading assembly has conveyed the consumable box into the storage channel, the loading assembly has a light load, in regardless of whether the loading assembly is slidingly connected with the storage body through a sliding rail, no loading assembly overburdens the sliding rail, such that the sliding rail is not easy to deform and damage.

### Brief Description of the Drawings

FIG. 1 is a schematic structural diagram of a consumable feeding system when a storage mechanism in the consumable feeding system is in a first state in some embodiments of the present invention;
FIG. 2 is a top view of the consumable feeding system shown in FIG. 1;
FIG. 3 is a schematic structural diagram of a consumable feeding system when a storage mechanism in the consumable feeding system is in a second state in some embodiments of the present invention;
FIG. 4 is a top view of the consumable feeding system shown in FIG. 3;
FIG. 5 is a schematic structural diagram of a storage assembly of the storage mechanism shown in FIG. 1;
FIG. 6 is a right view of the storage assembly shown in FIG. 5;
FIG. 7 is a schematic structural diagram of the storage assembly shown in FIG. 6 rotating a certain angle;
FIG. 8 is a schematic structural diagram of a loading assembly of the storage mechanism shown in FIG. 1;
FIG. 9 is a cross-sectional view of the loading assembly shown in FIG. 8 rotating a certain angle;
FIG. 10 is a top view of the loading assembly shown in FIG. 8;
FIG. 11 is a schematic diagram of a loading conveyor belt being mated with a storage conveyor belt when a loading assembly in the storage mechanism shown in FIG. 1 is slidably disposed on a storage body; and
FIG. 12 is a schematic diagram of a loading conveyor belt being mated with a storage conveyor belt when a loading assembly in the storage mechanism shown in FIG. 1 is rotatably disposed on a storage body.

### Reference numerals:

1: Consumable feeding system;
10: Storage mechanism; 20: Elevating mechanism;
11: Storage assembly; 12: Loading assembly; 13: Sliding rail;
111: Storage body; 111a: Storage channel; 111b: Inlet; 111c: Outlet; 112: Storage driver unit; 112a: Storage conveyor belt; 112b: Storage conveying section; 112c: Storage motor; 112d: Storage shaft; 112e: Storage driving wheel; 112g: Storage driven wheel;
121: Loading body; 122: Loading driver unit; 122a: Loading conveyor belt; 122b: Loading conveying section; 122c: Loading motor; 122d: Loading transmission wheel; 122e: Loading synchronous belt; 122f: Loading intermediate wheel; 122g: Loading shaft; 122h: Loading driving wheel; 122j: Loading driven wheel;
X, Width direction of storage conveyor belt; and Y, Extending direction of storage conveyor belt.

### Detailed Description of the Embodiments

In order to make the above purposes, features and advantages of the present invention more obvious and readily understood, specific implementations of the present invention are described below in detail with reference to the drawings. In the following description, many specific details are provided thereby giving a full understanding of the present invention. However, the present invention can be implemented in many other ways different from those described herein, and similar improvements can be made by those skilled in the art without violating the connotations of the present invention, such that the present invention is not limited by the specific embodiments disclosed below.

In the description of the present invention, it is to be understood that the terms "center," "longitudinal," "transverse," "length," "width," "thickness," "up," "down," "front," "back," "left," "right," "vertical," "horizontal," "top," "bottom," "inside," "outside," "clockwise," "counterclockwise," "axial," "radial," "circumferential," etc. indicate orientations or position relationships that are based on the orientations or position relationships as shown in the drawings, and are only intended to facilitate description of the present invention and to simplify the description, instead of indicating or implying that a device or an element indicated must have a specific orientation or be constructed and operated in a specific orientation, and thus cannot be understood as limiting the present invention.

Furthermore, the terms "first" and "second" are used for descriptive purposes only and are not to be construed as indicating or implying relative importance or implicitly specifying the number of technical features indicated. Thus, features defined by "first" and "second" may explicitly or implicitly include at least one such feature. In the description of the present invention, "a plurality of" means at least two, for example, two, three, or the like, unless otherwise explicitly specified.

In the present invention, unless otherwise expressly specified and limited, the technical terms "mount," "connected," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements, unless otherwise expressly specified. For those of ordinary skill in the art, the specific meanings of the above terms in the present invention can be understood according to specific situations.

In the present invention, unless otherwise expressly provided and specified, a first feature being "on" or "under" a second feature may be a direct contact between the first and second features, or an indirect contact between the first and second features through an intermediate medium. In addition, the first feature being "over," "above" and "on" the second feature may be that the first feature is right above or at an inclined upper portion of the second feature, or simply indicate that the horizontal height of the first feature is higher than that of the second feature. The first feature being "beneath," "under" and "below" the second feature may be that the first feature is right under or at an inclined lower portion of the second feature, or simply indicate that the horizontal height of the first feature is less than that of the second feature.

It is to be noted that, when one element is "fixed to" or "disposed on" the other element, the element may be directly on the other element or intermediate elements may exist at the same time. When one element is "connected to" the other element, the element may be directly connected to the other element or intermediate elements may exist at the same time. The terms "vertical," "horizontal," "up," "down," "left," "right," and similar expressions used herein are for illustrative purposes only and do not indicate the only implementation.

The present invention provides a sample analyzer. The sample analyzer is configured to detect a sample, and provide judgment criteria for clinical treatment. The sample analyzer may be an immunoassay analyzer, a coagulation analyzer, a hematology analyzer, a urine analyzer, etc., and a specific type is not limited herein. For ease of illustration, the following embodiments are all described by using the sample analyzer as the immunoassay analyzer.

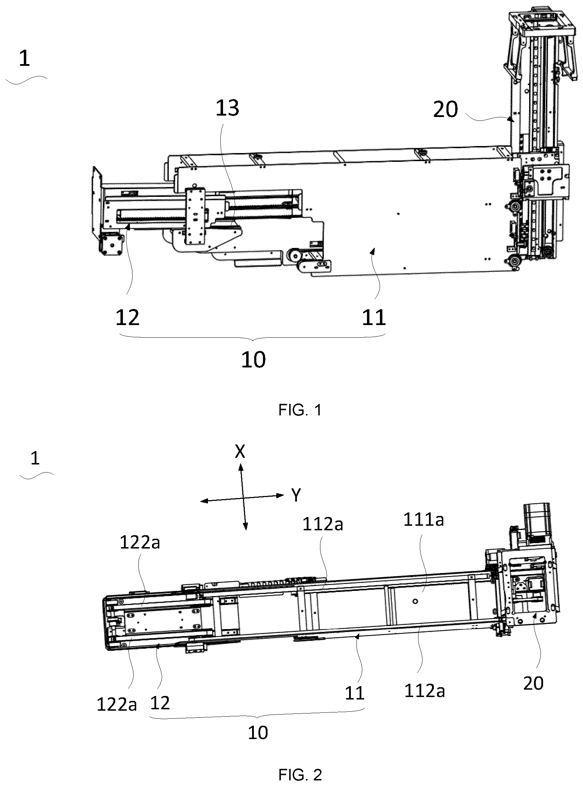

Referring to FIG. 1 to FIG. 4 together, the sample analyzer generally includes a consumable feeding system 1, wherein the consumable feeding system 1 is a system that is indispensable in the sample analyzer. The consumable feeding system 1 can store a consumable, and can convey the stored consumable to a feeding station for feeding, so as to rapidly replace the consumable, thereby ensuring that the immunoassay analyzer can operate continuously and efficiently.

The consumable feeding system 1 can directly convey and store the consumable, or the consumable feeding system 1 can also convey and store the consumable by means of conveying and storing a consumable box, and details can be set according to requirements. For ease of illustration, the following embodiments are described by using an example that the consumable feeding system 1 is configured to convey and store the consumable box.

The consumable feeding system 1 includes a storage mechanism 10 and an elevating mechanism 20. The storage mechanism 10 is configured to store the consumable box; and the elevating mechanism 20 is configured to transport the consumable box in the storage mechanism 10 to the feeding station, so as to realize consumable feeding.

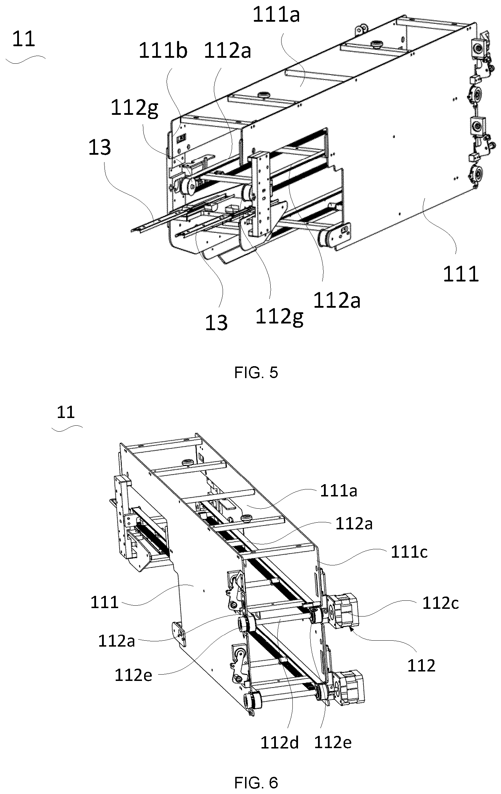

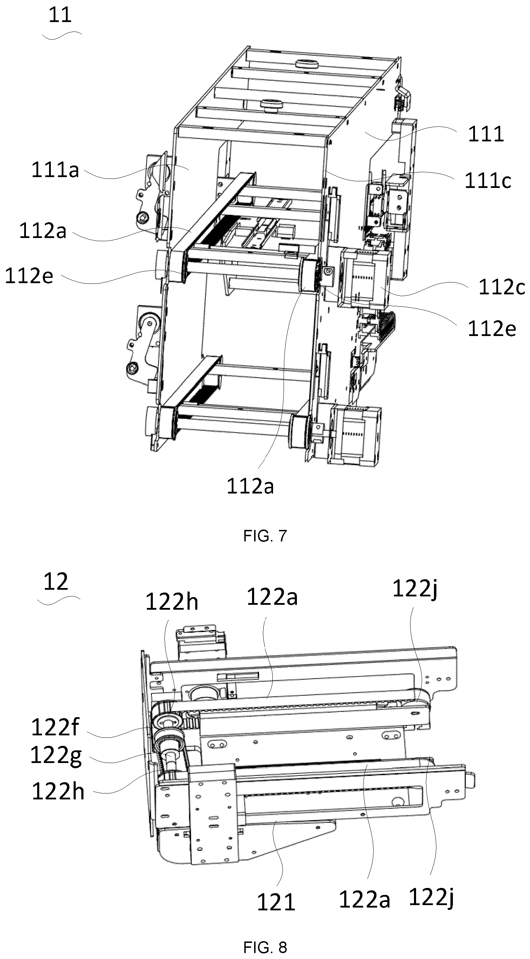

Referring to FIG. 1 to FIG. 4 again and simultaneously referring to FIG. 5 and FIG. 8, the storage mechanism 10 includes a storage assembly 11 and a loading assembly 12. The storage assembly 11 includes a storage body 111, and the storage body 111 is provided with a storage channel 111a; and the loading assembly 12 is movably disposed on the storage body 111. The storage mechanism 10 has a first state and a second state. When the storage mechanism 10 is in the first state, the loading assembly 12 opens an inlet 111b of the storage channel 111a, the loading assembly 12 at least partially protrudes from the storage channel 111a, and the loading assembly 12 can convey a loaded consumable into the storage channel 111a. When the storage mechanism 10 is in the second state, the loading assembly 12 closes an inlet 111b of the storage channel 111a. When the loading assembly 12 moves relative to the storage body 111 due to an external force, the storage mechanism 10 is switched between the first state and the second state.

The storage body 111 provides a storage space for storing the consumable box, and the storage space is the storage channel 111a.

The external force of the loading assembly 12 moving relative to the storage body 111 may be man power or a driving force that is provided by an external drive mechanism. In order to simplify a structure, the external force of the loading assembly 12 moving relative to the storage body 111 is the man power.

When the storage mechanism 10 is in the first state, the loading assembly 12 opens the inlet 111b of the storage channel 111a, and the loading assembly 12 at least partially protrudes from the storage channel 111a, so as to conveniently load the consumable box at the portion of the loading assembly 12 protruding from the storage channel 111a, and then the loading assembly 12 conveys the loaded consumable box into the storage channel 111a. When the storage mechanism 10 is in the second state, the loading assembly 12 closes the inlet 111b of the storage channel 111a to store the consumable box.

It can be understood that, the first state is a state that the storage mechanism 10 loads the consumable box, and the second state is a state that the storage mechanism 10 stores the consumable box.

In the related art, the consumable feeding system 1 includes a frame and a drawer structure, and the drawer structure is used as the storage mechanism 10. The drawer structure has a large storage space, and can store a plurality of consumable boxes at once. After the consumable box stored in the drawer structure is fed, a user can only load the consumable box by completely pulling out the drawer structure from the frame. The drawer structure has a very long length when being completely pulled out, and occupies a large space externally. Furthermore, in the process of loading the consumable box in the drawer structure and re-pulling the drawer structure back into the frame, due to a heavy load of the drawer structure, it is also easy to cause a sliding rail 13 that is slidingly connected between the drawer structure and the frame and configured to guide the drawer structure to slide to have a heavier burden and be easily deformed and damaged.

In the present invention, the storage mechanism 10 is designed to include the storage assembly 11 and the loading assembly 12, the storage body 111 of the storage assembly 11 is a portion that is fixed and generally fixed in the frame, the loading assembly 12 is a portion that moves relative to the storage body 111, and when the storage mechanism 10 is in the first state, the loading assembly 12 can partially protrude from the storage channel 111a. In this way, compared to the need of completely pulling out a drawer structure in the related art, the length of the loading assembly 12 protruding to the exterior is shorter, and a space occupied externally is also reduced. Furthermore, when the storage mechanism 10 is in the first state, the loading assembly 12 can automatically convey the loaded consumable into the storage channel 111a. Therefore, in the process of switching the storage mechanism 10 to the second state, since the loading assembly 12 has conveyed the consumable box into the storage channel 111a, the loading assembly 12 has a light load, in regardless of whether the loading assembly 12 is slidingly connected with the storage body 111 through the sliding rail 13, no loading assembly 12 overburdens the sliding rail 13, such that the sliding rail 13 is not easy to deform and damage.

In some optional embodiments, the loading assembly 12 is slidably disposed on the storage body 111, and the loading assembly 12 slides relative to the storage body 111, so as to cause the storage mechanism 10 to be switched between the first state and the second state; or the loading assembly 12 is rotatably disposed on the storage body 111, and the loading assembly 12 rotates relative to the storage body 111, so as to cause the storage mechanism 10 to be switched between the first state and the second state. The manner that the loading assembly 12 moves relative to the storage body 111 by means of sliding or rotating so as to realize the switching of the states of the storage mechanism 10 is simpler and convenient to operate.

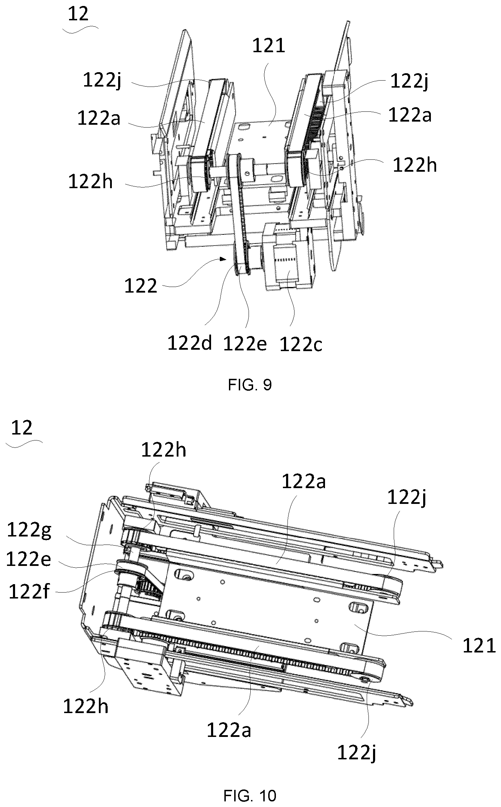

Referring to FIG. 1 to FIG. 4 again and simultaneously referring to FIG. 5 and FIG. 6, as well as FIG. 8 and FIG. 9, further, in some optional embodiments, the storage assembly 11 further includes a storage driver unit 112. The storage driver unit 112 is disposed on the storage body 111, and includes a storage conveyor belt 112a located in the storage channel 111a. The loading assembly 12 includes a loading body 121 and a loading driver unit 122. The loading body 121 is slidably or rotatably disposed on the storage body 111. The loading driver unit 122 is disposed on the loading body 121 and includes a loading conveyor belt 122a. The loading conveyor belt 122a and the storage conveyor belt 112a extend in substantially the same direction. When the storage mechanism 10 is in the first state, the loading body 121 opens the inlet 111b of the storage channel 111a, the loading body 121 and the loading conveyor belt 122a at least partially protrude from the storage channel 111a, and the loading conveyor belt 122a conveys the loaded consumable to the storage conveyor belt 112a. When the storage mechanism 10 is in the second state, the loading body 121 closes the inlet 111b of the storage channel 111a.

The loading body 121 may be slidingly disposed on the storage body 111 through the sliding rail 13, and in this case, the loading body 121 may be of a plate-like structure or a drawer structure, or the loading body 121 may also be rotatably disposed on the storage body 111 through a rotary shaft, and in this case, the loading body 121 is of the plate-like structure.

When the storage mechanism 10 is in the first state, the loading body 121 and the loading conveyor belt 122a both at least partially protrude from the storage channel 111a. The user loads the consumable box to the portion of the loading conveyor belt 122a protruding from the storage channel 111a, and then the loading conveyor belt 122a conveys the loaded consumable box to the storage conveyor belt 112a; and then, the storage conveyor belt 112a conveys the consumable box to an outlet 111c of the storage channel 111a, so as to clear a space for subsequent loading of the consumable box by the loading conveyor belt 122a. Therefore, by designing the loading conveyor belt 122a and the storage conveyor belt 112a, the loaded consumable box can be automatically conveyed into the storage channel 111a for storage, such that the conveying and storage of the consumable box are more automated, and the inconvenience of man power operation is reduced.

Furthermore, when the storage mechanism 10 is in the first state and the loading body 121 and the loading conveyor belt 122a at least partially protrude from the storage channel 111a, the pulled-out lengths of the loading body 121 and loading synchronous belt 122e during the loading of the consumable box can be reduced, and a space occupied by the storage mechanism 10 is also reduced accordingly. In the process of switching the storage mechanism 10 from the first state to the second state, the lengths of the loading body 121 and the loading conveyor belt 122a protruding from the storage channel 111a are reduced, and since the consumable box has been conveyed into the storage channel 111a through the storage conveyor belt 112a, in this case, there is no consumable box on the loading assembly 12, such that the loading assembly 12 is light in load without causing excessive burdens to the sliding rail 13. When the storage mechanism 10 is in the second state, the loading body 121 closes the inlet 111b of the storage channel 111a to avoid the falling of the consumable box from the inlet 111b of the storage channel 111a, and in this case, the storage mechanism 10 has the shortest length and is small in occupied space.

It is to be noted that, in the embodiment, in order to avoid the outputting of the consumable box from the outlet 111c of the storage channel 111a, a limiting mechanism is further disposed in the consumable feeding system 1. The limiting mechanism is disposed at the outlet 111c of the storage channel 111a, and configured to block the consumable box and reduce the risk of outputting the consumable box from the outlet 111c of the storage channel 111a such that the consumable box can be stored in the storage channel 111a. Definitely, after feeding is completed, and when the elevating mechanism 20 is required to convey the consumable box stored in the channel to the feeding station, a limiting function of the limiting mechanism fails.

Further, in some optional embodiments, when the loading body 121 is slidably disposed on the storage body 111 and the storage mechanism 10 is in the second state, the loading conveyor belt 122a is completely accommodated in the storage channel 111a. In this way, a length when the storage mechanism 10 is in the second state can be reduced to cause the storage mechanism 10 to have a small occupied space. Or the loading body 121 is rotatably disposed on the storage body 111, and the loading assembly 12 is always located outside the storage channel 111a. In this way, interference of the storage body 111 with the rotation of the loading body 121 can be reduced to cause the storage mechanism 10 to be capable of smoothly realizing state switching. Furthermore, the loading assembly 12 is always located outside the storage channel 111a, such that a contact area between the loading assembly 12 and the storage body 111 can also be reduced, facilitating reduction in abrasion between the loading assembly 12 and the storage body 111 in the state switching process of the storage mechanism 10, thereby achieving convenient operation and labor saving.

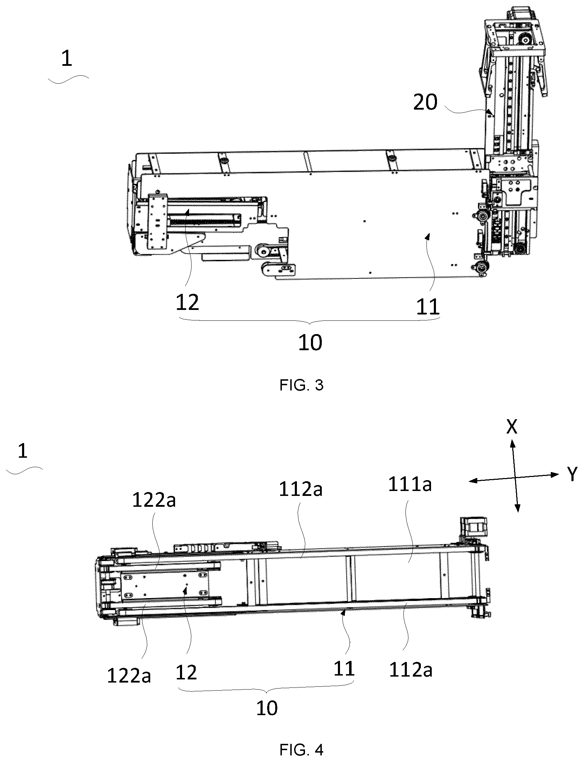

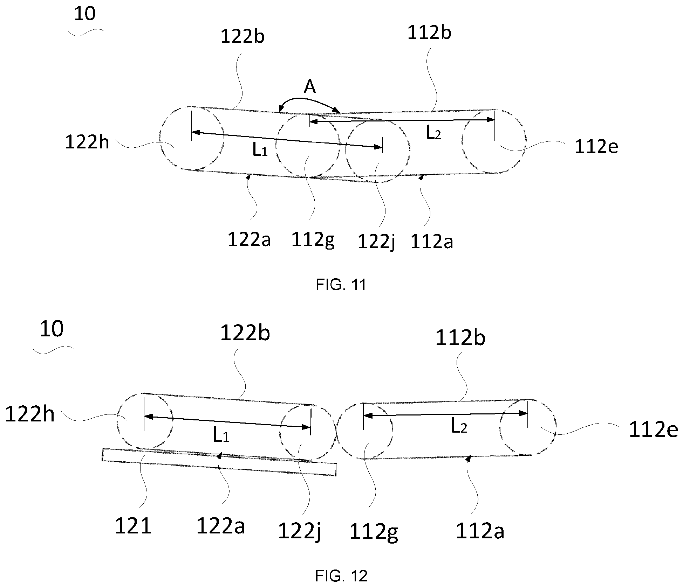

Referring to FIG. 4, FIG. 11, and FIG. 12, in some optional embodiments, the loading conveyor belt 122a is provided with a loading conveying section 122b configured to convey the consumable. The storage conveyor belt 112a is provided with a storage conveying section 112b configured to convey the consumable. The loading conveying section 122b and the storage conveying section 112b extend in the same direction. The loading conveying section 122b is a tilted section of which height gradually decreases in an extending direction of the loading conveying section, the storage conveying section 112b is a straight section with an unchanged height in an extending direction Y of the storage conveying section, the loading conveying section 122b is provided at an included angle to the storage conveying section 112b, and the included angle (Angle A in FIG. 11) is greater than 90°. When the storage mechanism 10 is in the first state, the loading conveying section 122b is at least partially higher than the storage conveying section 112b, and a portion of the loading conveying section 122b that is higher than the storage conveying section 112b is configured to convey the consumable to the storage conveying section 112b.

The loading conveying section 122b refers to a section of the loading conveyor belt 122a that can be configured to load and convey the consumable box, and the storage conveying section 112b refers to a section of the storage conveyor belt 112a that can be configured to convey the consumable box. For example, the loading conveyor belt 122a and the storage conveying section 112b both are synchronous belts that are sleeved on corresponding driving wheels and corresponding driven wheels, the loading conveying section 122b refers to a section of the loading conveyor belt 122a that is located on same sides of the driving wheel and the driven wheel, which are sleeved by the loading conveyor belt 122a, and can load and convey the consumable box, and a length of the section is roughly a center distance between the driving wheel and the driven wheel, which are sleeved by the loading conveyor belt 122a (as shown in L₁ of FIG. 11 and FIG. 12). The storage conveying section 112b refers to a section of the storage conveyor belt 112a that is located on same sides of the driving wheel and the driven wheel, which are sleeved by the storage conveyor belt 112a, and can convey the consumable box, and a length of the section is roughly a center distance between the driving wheel and the driven wheel, which are sleeved by the storage conveyor belt 112a (as shown in L₂ of FIG. 11 and FIG. 12).

Since the loading conveying section 122b is the tilted section of which height gradually decreases in the extending direction of the loading conveying section, in the process of conveying the consumable box to the storage conveyor belt 112a by the loading conveyor belt 122a, the consumable box can slide along the extending direction of the loading conveyor belt 122a under the action of gravity and gradually slide downward, thereby ensuring the conveying reliability of the consumable box on the loading conveying section 122b. When the storage mechanism 10 is in the first state, the loading conveying section 122b is at least partially higher than the storage conveying section 112b, and the portion of the loading conveying section 122b that is higher than the storage conveying section 112b is configured to convey the consumable to the storage conveyor belt 112a, such that before the consumable box is conveyed to the storage conveying section 112b, a position of the consumable box is always higher than the storage conveying section 112b, and when the consumable box is conveyed to a position at which the loading conveying section 122b is at the same height as the storage conveying section 112b, the consumable box can be smoothly transitioned onto the storage conveying section 112b, thereby ensuring the reliability of the transition of the consumable box from the loading conveying section 122b to the storage conveying section 112b.

Continuously referring to FIG. 1 to FIG. 4, in some optional embodiments, when the loading body 121 is slidably disposed on the storage body 111, the loading conveyor belt 122a and the storage conveyor belt 112a are arranged along a width direction X of the storage conveyor belt 112a. In this way, the loading conveyor belt 122a and the storage conveyor belt 112a always are provided a spatially-overlapping portion in the extending direction Y of the storage conveyor belt 112a, such that the length of the storage mechanism 10 is reduced, and the purpose of reducing a space occupied by the storage mechanism 10 is realized ultimately.

In some optional embodiments, when the loading body 121 is rotatably disposed on the storage body 111 and the storage mechanism 10 is in the first state, the loading conveyor belt 122a and the storage conveyor belt 112a are arranged along the extending direction Y of the storage conveyor belt 112a. The loading body 121 rotates relative to the storage body 111, and the included angle between the loading conveyor belt 122a and the storage conveyor belt 112a changes. In particular, in the process of switching the storage mechanism 10 from the second state to the first state, the included angle between the loading conveyor belt 122a and the storage conveyor belt 112a gradually increases; and when switching to the first state, the included angle between the loading conveyor belt 122a and the storage conveyor belt 112a is close to or at 180°, and the loading conveyor belt 122a and the storage conveyor belt 112a extend in substantially the same direction, so as to cause the loading conveyor belt 122a to convey the consumable box to the storage conveyor belt 112a. In the process of switching the storage mechanism 10 from the first state to the second state, the included angle between the loading conveyor belt 122a and the storage conveyor belt 112a gradually decreases; and when switching to the second state, the included angle between the loading conveyor belt 122a and the storage conveyor belt 112a is close to or at 90°, and the loading conveyor belt 122a is substantially perpendicular to the storage conveyor belt 112a, such that the length of the storage mechanism 10 can be reduced to achieve the purpose of reducing the space occupied by the storage mechanism 10.

Referring to FIG. 8, FIG. 9, and FIG. 10, in some optional embodiments, the loading driver unit 122 includes a loading motor 122c, a loading transmission wheel 122d, a loading synchronous belt 122e, a loading intermediate wheel 122f, a loading shaft 122g, loading driving wheels 122h, and loading driven wheels 122j. The loading motor 122c, the loading shaft 122g, and the loading driven wheels 122j are all mounted on the loading body 121, the loading motor 122c is connected with the loading transmission wheel 122d, the loading synchronous belt 122e is sleeved outside the loading transmission wheel 122d and loading intermediate wheel 122f, the loading driving wheels 122h are distributed on two opposite sides of the loading intermediate wheel 122f, the loading driving wheels 122h and the loading intermediate wheel 122f are all fixed on the loading shaft 122g, the loading driving wheels 122h, the loading driven wheels 122j, and the loading conveyor belts 122a are all plural, the loading driving wheels 122h and the loading driven wheels 122j all correspond to the loading conveyor belts 122a on a one-to-one basis, and the loading conveyor belt 122a is sleeved outside corresponding the loading driving wheel 122h and corresponding the loading driven wheel 122j.

In the above embodiments, there are a plurality of loading conveyor belts 122a, and the same consumable box is simultaneously carried on all the loading conveyor belts 122a, such that the stability of transporting the consumable box can also be improved.

In practice, the power of the loading motor 122c is transferred to the loading conveyor belt 122a successively by the loading transmission wheel 122d, the loading synchronous belt 122e, the loading intermediate wheel 122f, the loading shaft 122g, and the loading driving wheels 122h. In the embodiment, all the loading conveyor belts 122a operate under the driving of the same loading motor 122c, such that the loading driver unit 122 has less components, thereby achieving a simple and compact structure.

It can be understood that, the loading driving wheel 122h in this embodiment is the driving wheels sleeved by the loading conveyor belts 122a, and the loading driven wheel 122j in this embodiment is the driven wheel sleeved by the loading conveyor belts 122a.

Referring to FIG. 5, FIG. 6, and FIG. 7, in some optional embodiments, the storage driver unit 112 further includes a storage motor 112c, a storage shaft 112d, storage driving wheels 112e, and storage driven wheels 112g. There are a plurality of the storage driving wheels 112e, the storage driven wheels 112g, and the storage conveyor belts 112a. Furthermore, the storage driving wheels 112e and the storage driven wheels 112g correspond to the storage conveyor belts 112a on a one-to-one basis. The storage conveyor belt 112a is sleeved outside the corresponding storage driving wheel 112e and the corresponding storage driven wheel 112g. The storage motor 112c and the storage driven wheels 112g are all mounted on the storage body 111, and the storage motor 112c is in transmission connection with one of the storage driving wheels 112e; and all the storage driving wheels 112e are sleeved and fixed on the storage shaft 112d, and the power of the storage motor 112c is transferred to the storage conveyor belt 112a corresponding to the storage driving wheel 112e by the storage driving wheel 112e.

In the embodiment, there are a plurality of storage conveyor belts 112a, and the same consumable box is simultaneously carried on all the storage conveyor belts 112a, such that the stability of transporting the consumable box can be improved. Furthermore, all the storage conveyor belts 112a operate under the driving of the same storage motor 112c, such that the storage driver unit 112 has less components, thereby achieving a simple and compact structure.

It can be understood that, the storage driving wheel 112e in this embodiment is the driving wheels sleeved by the storage conveyor belt 112a, and the storage driven wheel 112g in this embodiment is the driven wheel sleeved by the storage conveyor belt 112a.

Referring to FIG. 4 to FIG. 9, in some optional embodiments, the storage mechanism 10 further includes a loading detection member, and the loading detection member is disposed on the loading body 121. The loading detection member is configured to detect whether the consumable is loaded onto the loading conveyor belt 122a when the storage mechanism 10 is in the first state, the loading driver unit 122 and the storage driver unit 112 both are configured to be turned on when the consumable is loaded onto the loading conveyor belt 122a.

In particular, the storage mechanism 10 further includes a controller. The loading detection member, the loading motor 122c, and the storage motor 112c are all electrically connected with the controller. When the storage mechanism 10 is in the first state, after the loading detection member detects that the consumable box is loaded on the loading conveyor belt 122a, the loading detection member feeds back a signal to the controller, and the controller controls the loading motor 122c and the storage motor 112c to start, such that the loading conveyor belt 122a can convey the consumable box onto the storage conveyor belt 112a; and the storage conveyor belt 112a receives the consumable box of the loading conveyor belt 122a, and conveys the consumable box to the outlet 111c of the storage channel 111a, thereby achieving the purpose of automatically conveying and storing the consumable box by the storage mechanism 10.

In some optional embodiments, the storage mechanism 10 further includes a loading body detection member, a counting-checking detection member, and an outlet detection member. The loading body detection member, the counting-checking detection member, and the outlet detection member are all electrically connected with the controller. The loading body detection member is configured to detect whether the loading assembly 12 closes the inlet 111b of the storage channel 111a when the storage mechanism 10 is in the second state; the counting-checking detection member is configured to count the number of the consumable boxes conveyed onto the storage conveyor belt 112a when the storage mechanism 10 is in the first state; and the outlet detection member is configured to detect whether the first-loaded consumable box reaches the outlet 111c of the storage channel 111a when the storage mechanism 10 is in the second state. Furthermore, the counting-checking detection member cooperates with the outlet detection member to realize a consumable box counting operation.

In particular, after the consumable boxes are fully stored in the storage channel 111a, that is, when the counting-checking detection member detects that the number of the consumable boxes conveyed onto the storage conveyor belt 112a when the storage mechanism 10 is in the first state reaches a storage threshold, for example, the storage threshold is 9, that is, when the counting-checking detection member detects that the number of the consumable boxes conveyed onto the storage conveyor belt 112a when the storage mechanism 10 is in the first state reaches 9, the controller controls the loading motor 122c and the storage motor 112c to close, the loading conveyor belt 122a and the storage conveyor belt 112a stop conveying, the user operates the loading assembly 12 to close the inlet 111b of the storage channel 111a, and the storage mechanism 10 is switched to the second state. Then, the loading body detection member detects that the loading assembly 12 closes the inlet 111b of the storage channel 111a, and the storage mechanism 10 starts performing a counting operation. The counting operation refers to an operation of counting the number of the consumable boxes.

A specific process of performing the counting operation includes: the controller controlling the storage motor 112c to start, and the storage conveyor belt 112a driving the consumable box to move toward the outlet 111c of the storage channel 111a, until the outlet detection member detects that the first-loaded consumable box reaches the outlet 111c of the storage channel 111a. Due to the arrangement of the limiting mechanism, the limiting mechanism can block the consumable box from being outputted from the outlet 111c, thereby ensuring that the consumable box can stay in the storage channel 111a. Then, the storage motor 112c continues to operate to cause the storage conveyor belt 112a to move a fixed distance, and the fixed distance is a distance of the storage conveying section 112b. In this way, the consumable boxes can be closely arranged and aligned at the outlet 111c of the storage channel 111a. Then, the storage motor 112c drives the storage driving wheel 112e and the storage driven wheel 112g to rotate reversely, all the consumable boxes on the storage conveyor belt 112a are conveyed to the inlet 111b of the storage channel 111a, and in this process, the storage conveyor belt 112a conveys a distance of one consumable box at a time to the inlet 111b of the storage channel 111a; if the counting-checking detection member does not detect the consumable box, the distance of one consumable box is conveyed continuously, and the counting-checking detection member detects again; and so on, until the counting-checking detection member detects the consumable box. The number of the consumable boxes can be known based on the length of the storage conveying section 112b of the storage conveyor belt 112a, as well as the number of times that the storage conveyor belt 112a conveys the distance of one consumable box at a time to the inlet 111b of the storage channel 111a. For example, the length of the storage conveying section 112b is S, the length of the consumable box is L, after the storage conveyor belt 112a conveys the distance of one consumable box to the inlet 111b of the storage channel 111a for 5 times, the counting-checking detection member detects the consumable box, and then the number of the consumable boxes in the storage channel 111a is (S-5L)/L.

Therefore, the consumable boxes in the storage channel 111a can be automatically counted by designing the loading body detection member, the counting-checking detection member, and the outlet detection member.

According to the storage mechanism 10, the consumable feeding system 1, and the sample analyzer, the storage mechanism 10 is designed to include the storage assembly 11 and the loading assembly 12, the storage body 111 of the storage assembly 11 is a portion that is fixed, the loading assembly 12 is a portion that moves relative to the storage body 111, and when the storage mechanism 10 is in the first state, the loading assembly 12 can partially protrude from the storage channel 111a. In this way, a length of the loading assembly 12 protruding to the exterior is shorter, and a space occupied externally is also reduced. Furthermore, when the storage mechanism 10 is in the first state, the loading assembly 12 can automatically convey the loaded consumable into the storage channel 111a. Therefore, in the process of switching the storage mechanism 10 to the second state, since the loading assembly 12 has conveyed the consumable box into the storage channel 111a, the loading assembly 12 has a light load, in regardless of whether the loading assembly 12 is slidingly connected with the storage body 111 through the sliding rail 13, no loading assembly 12 overburdens the sliding rail 13, such that the sliding rail 13 is not easy to deform and damage.

The various technical features of the above embodiments may be combined in any combination. In order to make the description concise, all possible combinations of the various technical features of the above embodiments have not been described. However, as long as there is no contradiction in the combinations of these technical features, the technical features should all be considered to be within the scope of the present specification as documented herein.

The above embodiments express only several implementations of the present invention, which are described in a more specific and detailed manner, but are not to be construed as a limitation of the scope of the patent invention. It should be noted that, for a person of ordinary skill in the art, a number of deformations and improvements can also be made without departing from the conception of the present invention, all of which fall within the scope of protection of the present invention. Therefore, the protection scope of the present invention shall be subject to the appended claims.

## Claims

1. A storage mechanism, wherein the storage mechanism comprises:
a storage assembly (11) comprising a storage body (111), wherein the storage body (111) is provided with a storage channel (111a); and
a loading assembly (12) movably disposed on the storage body (111), wherein the storage mechanism has a first state and a second state; when the storage mechanism is in the first state, the loading assembly (12) opens an inlet (111b) of the storage channel (111a), the loading assembly (12) at least partially protrudes from the storage channel (111a), and the loading assembly (12) is capable of conveying a loaded consumable into the storage channel (111a); when the storage mechanism is in the second state, the loading assembly (12) closes the inlet (111b) of the storage channel (111a); and
when the loading assembly (12) moves relative to the storage body (111) due to an external force, the storage mechanism is switched between the first state and the second state.

2. The storage mechanism according to claim 1, wherein the loading assembly (12) is slidably disposed on the storage body (111), and the loading assembly (12) slides relative to the storage body (111) such that the storage mechanism is switched between the first state and the second state.

3. The storage mechanism according to claim 1, wherein the loading assembly (12) is rotatably disposed on the storage body (111), and the loading assembly (12) rotates relative to the storage body (111) such that the storage mechanism is switched between the first state and the second state.

4. The storage mechanism according to claim 2, wherein the storage assembly (11) further comprises a storage driver unit (112), and the storage driver unit (112) is disposed on the storage body (111) and comprises a storage conveyor belt (112a) located in the storage channel (111a);
the loading assembly (12) comprises a loading body (121) and a loading driver unit (122), the loading body (121) is slidably disposed on the storage body (111), and the loading driver unit (122) is disposed on the loading body (121) and comprises a loading conveyor belt (122a); and
when the storage mechanism is in the first state, the loading body (121) opens the inlet (111b) of the storage channel (111a), the loading body (121) and the loading conveyor belt (122a) at least partially protrude from the storage channel (111a), the loading conveyor belt (122a) conveys the loaded consumable to the storage conveyor belt (112a), and when the storage mechanism is in the second state, the loading body (121) closes the inlet (111b) of the storage channel (111a).

5. The storage mechanism according to claim 3, wherein the storage assembly (11) further comprises a storage driver unit (112), and the storage driver unit (112) is disposed on the storage body (111) and comprises a storage conveyor belt (112a) located in the storage channel (111a);
the loading assembly (12) comprises a loading body (121) and a loading driver unit (122), the loading body (121) is rotatably disposed on the storage body (111), and the loading driver unit (122) is disposed on the loading body (121) and comprises a loading conveyor belt (122a); and
when the storage mechanism is in the first state, the loading body (121) opens the inlet (111b) of the storage channel (111a), the loading body (121) and the loading conveyor belt (122a) at least partially protrude from the storage channel (111a), the loading conveyor belt (122a) conveys the loaded consumable to the storage conveyor belt (112a), and when the storage mechanism is in the second state, the loading body (121) closes the inlet (111b) of the storage channel (111a).

6. The storage mechanism according to claim 4, wherein the loading body (121) is slidably disposed on the storage body (111), and when the storage mechanism is in the second state, the loading conveyor belt (122a) is completely accommodated in the storage channel (111a).

7. The storage mechanism according to claim 5, wherein the loading body (121) is rotatably disposed on the storage body (111), and the loading assembly (12) is always located outside the storage channel (111a).

8. The storage mechanism according to claim 4 or 5, wherein the loading conveyor belt (122a) is provided with a loading conveying section (122b) configured to convey the consumable, the storage conveyor belt (112a) is provided with a storage conveying section (112b) configured to convey the consumable, and the loading conveying section (122b) and the storage conveying section (112b) extend in a same direction; the loading conveying section (122b) is a tilted section of which height gradually decreases in an extending direction of the loading conveying section, the storage conveying section (112b) is a straight section with an unchanged height in an extending direction (Y) of the storage conveying section, the loading conveying section (122b) is provided at an included angle to the storage conveying section (112b), and the included angle is greater than 90°; and
when the storage mechanism is in the first state, the loading conveying section (122b) is at least partially higher than the storage conveying section (112b), and a portion of the loading conveying section (122b) that is higher than the storage conveying section (112b) is configured to convey the consumable to the storage conveying section (112b).

9. The storage mechanism according to claim 4, wherein when the loading body (121) is slidably disposed on the storage body (111), the loading conveyor belt (122a) and the storage conveyor belt (112a) are arranged along a width direction (X) of the storage conveyor belt (112a).

10. The storage mechanism according to claim 5, wherein when the loading body (121) is rotatably disposed on the storage body (111) and the storage mechanism is in the first state, the loading conveyor belt (122a) and the storage conveyor belt (112a) are arranged along an extending direction (Y) of the storage conveyor belt (112a).

11. The storage mechanism according to claim 4 or 5, wherein the loading driver unit (122) further comprises a loading motor (122c), a loading transmission wheel (122d), a loading synchronous belt (122e), a loading intermediate wheel (122f), a loading shaft (122g), loading driving wheels (122h), and loading driven wheels (122j); and
the loading motor (122c), the loading shaft (122g), and the loading driven wheels (122j) are all mounted on the loading body (121), the loading motor (122c) is connected with the loading transmission wheel (122d), the loading synchronous belt (122e) is sleeved outside the loading transmission wheel (122d) and loading intermediate wheel (122f), the loading driving wheels (122h) are distributed on two opposite sides of the loading intermediate wheel (122f), the loading driving wheels (122h) and the loading intermediate wheel (122f) are all fixed on the loading shaft (122g), the loading driving wheels (122h) and the loading driven wheels (122j) all correspond to the loading conveyor belts (122a) on a one-to-one basis, and the loading conveyor belt (122a) is sleeved outside corresponding the loading driving wheel (122h) and corresponding the loading driven wheel (122j).

12. The storage mechanism according to claim 4 or 5, wherein the storage mechanism further comprises a loading detection member, and the loading detection member, is disposed on the loading body (121); and
the loading detection member is configured to detect whether the consumable is loaded onto the loading conveyor belt (122a) when the storage mechanism is in the first state, the loading driver unit (122) and the storage driver unit (112) both are configured to be turned on when the consumable is loaded onto the loading conveyor belt (122a).

13. The storage mechanism according to claim 4 or 5, wherein the storage mechanism (10) further includes a controller, a loading body detection member, a counting-checking detection member, and an outlet detection member, the loading body detection member, the counting-checking detection member, and the outlet detection member are all electrically connected with the controller;
the loading body detection member is configured to detect whether the loading assembly (12) closes the inlet (111b) of the storage channel (111a) when the storage mechanism (10) is in the second state;
the counting-checking detection member is configured to count a number of consumable boxes conveyed onto the storage conveyor belt (112a) when the storage mechanism (10) is in the first state; and
the outlet detection member is configured to detect whether a first-loaded consumable box reaches an outlet (111c) of the storage channel (111a) when the storage mechanism (10) is in the second state, the counting-checking detection member cooperates with the outlet detection member to realize a consumable box counting operation.

14. A consumable feeding system, wherein the consumable feeding system comprises the storage mechanism according to any one of claims 1 to 13.

15. A sample analyzer, wherein the sample analyzer comprises the consumable feeding system according to claim 14.
